# EUROPÄISCHE PATENTSCHRIFT

(11) **EP 4 060 179 B1**
(45) Veröffentlichungstag und Bekanntmachung des Hinweises auf die Patenterteilung: **17.06.2026**
(21) Anmeldenummer: 22152839.1
(22) Anmeldetag: 22.01.2022
(51) Int. Cl.: F02M 25/08

(54) **VERFAHREN ZUR FUNKTIONSPRÜFUNG EINES KRAFTSTOFFTANKSYSTEMS EINER BRENNKRAFTMASCHINE**
METHOD FOR TESTING THE FUNCTION OF A FUEL TANK SYSTEM OF AN INTERNAL COMBUSTION ENGINE
PROCÉDÉ D'ESSAI FONCTIONNEL D'UN SYSTÈME DE RÉSERVOIR DE CARBURANT D'UN MOTEUR À COMBUSTION INTERNE

(30) Priorität: 15.03.2021 DE 102021202516
(43) Veröffentlichungstag der Anmeldung: 21.09.2022
(73) Patentinhaber: VOLKSWAGEN AG, 38440 Wolfsburg (DE)
(72) Erfinder: Tesic, Aleksandar, 38444 Wolfsburg (DE); Fink, Dr. Rene, 23970 Wismar (DE); Wassmann, Stephan, 38550 Isenbüttel (DE); Ölscher, Jacky, 39619 Arendsee OT Höwisch (DE); Pralle, Dr. Harm, 38124 Braunschweig (DE); Fröhlich, Dr. Björn, 38518 Gifhorn (DE); Weddig, Silke, 38114 Braunschweig (DE); Dieterle, Dr. Georg, 82024 Taufkirchen (DE)
(74) Vertreter: Bungartz, Florian

(56) Entgegenhaltungen:
- DE-A1- 102014 208 987
- DE-T5- 112017 001 972
- US-A1- 2015 114 361
- US-B2- 6 840 233

## Beschreibung

Die Erfindung betrifft ein Verfahren zur Funktionsprüfung eines Kraftstofftanksystems einer Brennkraftmaschine

Kraftstofftanksysteme für Brennkraftmaschinen von Kraftfahrzeugen weisen regelmäßig eine Entlüftungsleitung auf, die es ermöglicht, einen ansteigenden Druck in dem Kraftstofftank des Tanksystems infolge von beispielsweise bei hohen Umgebungstemperaturen verdampfendem Kraftstoff an die Umgebung zu entlasten. Dabei dürfen aufgrund von Emissionsvorschriften möglichst keine Kraftstoffdämpfe in die Umgebung gelangen. Dies wird verhindert, indem in die Entlüftungsleitung ein Kraftstoffdampffilter, regelmäßig in Form eines Aktivkohlefilters, integriert ist, der die Kraftstoffdämpfe absorbiert.

Zur Regeneration der Kraftstoffdampffilter sind solche Tanksysteme zusätzlich mit einer Spülgasleitung versehen, die einerseits mit dem Kraftstoffdampffilter und andererseits mit dem Frischgasstrang der Brennkraftmaschine verbunden ist. Im Betrieb der Brennkraftmaschine kann zeitweise mittels des im Bereich der Mündung der Spülgasleitung in dem Frischgasstrang herrschenden Unterdrucks Umgebungsluft über eine Umgebungsmündung des Kraftstoffdampffilters angesaugt werden, die den Kraftstoffdampffilter durchströmen und diesen dadurch spülen. Die Kraftstoffdämpfe aus dem Kraftstoffdampffilter werden so über den Frischgasstrang den Brennräumen des Verbrennungsmotors der Brennkraftmaschine zugeführt. Eine mangelnde Dichtheit des Entlüftungssystems eines Tanksystems würde zu einem unkontrollierten Entweichen von Kraftstoffdämpfen in die Umgebung führen, was zu vermeiden ist.

Die WO 2018/108761 A1 offenbart ein Verfahren zur Prüfung der Dichtheit eines Kraftstofftanksystems einer Brennkraftmaschine. Das Kraftstofftanksystem umfasst einen Kraftstofftank, einen Kraftstoffdampffilter, der in fluidleitender Verbindung mit einer Umgebungsmündung steht, eine von dem Kraftstofftank zu dem Kraftstoffdampffilter führende Entlüftungsleitung, eine von dem Kraftstoffdampffilter zu einem Frischgasstrang der Brennkraftmaschine führende Spülgasleitung, eine in die Spülgasleitung integrierte Gasfördervorrichtung und ein in die Spülgasleitung integriertes Absperrventil, das zwischen einer Mündung der Spülgasleitung in den Frischgasstrang und der Gasfördervorrichtung angeordnet ist. Zur Prüfung der Dichtheit eines solchen Kraftstofftanksystems ist vorgesehen, dass durch einen Vergleich mindestens eines bei einem definierten Betriebszustand des Kraftstofftanksystems ermittelten Werts oder Wertverlaufs eines Parameters, der einem Betriebsparameter des Verdichters oder dem Druck in zumindest einem zu prüfenden Abschnitt der Spülgasleitung entspricht, mit einem dazugehörigen, diesen Betriebszustand repräsentierenden Sollwert oder Sollwertbereich, der einer ausreichenden Dichtheit entspricht, zwischen ausreichender und nicht ausreichender Dichtheit unterschieden wird.

Aus der DE 10 2011 084 403 A1 ist ein Tankentlüftungssystem für eine Brennkraftmaschine mit einem Kraftstofftank, einem Kraftstoffdampffilter, einem Tankentlüftungsventil und mindestens einem Rückschlagventil bekannt. Zwischen dem Tankentlüftungsventil und dem Rückschlagventil ist ein Drucksensor angeordnet. Zur Diagnose des Tankentlüftungssystems wird zwischen dem Tankentlüftungsventil und dem Rückschlagventil ein Unterdruck eingestellt, der geringer ist als der Umgebungsdruck. Der eingestellte Druck wird durch Ansteuern des Tankentlüftungsventils geändert. Die Änderung des Drucks in der Leitung zwischen dem Tankentlüftungsventil und dem Rückschlagventil wird mittels des Drucksensors gemessen und der Ansteuerung des Tankentlüftungsventils zugeordnet. Aus der Korrelation des Öffnungszustands des Tankentlüftungsventils und der Änderung des Drucks in der Leitung zwischen dem Tankentlüftungsventil und dem Rückschlagventil wird auf die Funktion der Tankentlüftungsleitung, des Rückschlagventils und des Tankentlüftungsventils geschlossen. Insbesondere kann dabei auch auf die Dichtheit des Tankentlüftungssystems in dem Abschnitt zwischen dem Tankentlüftungsventil und dem Rückschlagventil geschlossen werden.

Die DE 11 2017 001 972 T5 offenbart ein Verfahren zur Leckageprüfung eines Kraftstofftanksystems, bei dem drei verschiedene Diagnoseschritte durchgeführt werden. Bei einem zweiten Diagnoseschritt ist ein Steuerventil, das einer Steuerung einer Spülgasströmung zu einem Frischgasstrang einer Brennkraftmaschine dient, geöffnet. Während dieses zweiten Diagnoseschritts wird mittels einer rückwärts angetriebenen Pumpe Gas aus dem Frischgasstrang in Richtung eines Kraftstoffdampffilters gefördert, um anhand eines sich einstellenden Überdrucks ein mögliches Vorliegen einer Leckage zu ermitteln.

Die US 6 840 233 B1 beschreibt ein Verfahren zur Prüfung der Funktionsfähigkeit eines Steuerventils, wozu ein Druck ausgewertet wird, der in einem Frischgasstrang einer Brennkraftmaschine gemessen wird.

Der Erfindung liegt die Aufgabe zugrunde, eine vorteilhafte Möglichkeit zur Funktionsprüfung eines Kraftstofftanksystems einer Brennkraftmaschine anzugeben.

Diese Aufgabe wird mittels eines Verfahrens gemäß dem Patentanspruch 1 gelöst. Vorteilhafte Ausführungsformen dieses Verfahrens sind Gegenstände der weiteren Patentansprüche und ergeben sich aus der nachfolgenden Beschreibung der Erfindung.

Erfindungsgemäß ist ein Verfahren zur Funktionsprüfung eines Kraftstofftanksystems einer Brennkraftmaschine, insbesondere einer Brennkraftmaschine eines Kraftfahrzeugs, vorgesehen, wobei das Kraftstofftanksystem zumindest
- einen Kraftstofftank,
- einen Kraftstoffdampffilter (vorzugsweise ein Sorptionsfilter, insbesondere ein Aktivkohlefilter), der in fluidleitender Verbindung mit einer Umgebungsmündung steht,
- eine von dem Kraftstofftank zu dem Kraftstoffdampffilter führende Entlüftungsleitung,
- eine von dem Kraftstoffdampffilter zu einem Frischgasstrang der Brennkraftmaschine führende Spülgasleitung,
- eine in die Spülgasleitung integrierte Gasfördervorrichtung (Kompressor oder Gebläse) zur Förderung von Spülgas durch die Spülgasleitung,
- ein Absperrventil, das zwischen einer Mündung der Spülgasleitung in den Frischgasstrang und der Gasfördervorrichtung in der Spülgasleitung angeordnet ist, und
- einen in die Spülgasleitung integrierten Drucksensor
umfasst. Im Rahmen des erfindungsgemäßen Verfahrens wird zumindest zeitweise die Gasfördervorrichtung betrieben und das Absperrventil mittels PWM (Pulsweitenmodulation) angesteuert, wodurch das Absperrventil zur Realisierung eines definierten Öffnungszustands einem PWM-Signal entsprechend mehrfach geöffnet und geschlossen wird, wobei gemäß einer Frequenzdiagnose eine Druckschwingung in dem Spülgas, die sich durch die entsprechenden Öffnungs- und Schließbewegungen des Absperrventils ergibt, mittels des Drucksensors ermittelt und ausgewertet wird und basierend auf dem Ergebnis der Auswertung zwischen einer Funktionsfähigkeit und einer Fehlfunktion unterschieden wird.

Der Vorteil dieses Verfahrens liegt darin, dass die Funktionsprüfung im Rahmen der Frequenzdiagnose während eines regulären Betriebs der Gasfördervorrichtung, die folglich für ein Spülen des Kraftstoffdampffilters durchgeführt wird, realisiert wird und kein davon unabhängiger Diagnosebetrieb der Gasfördervorrichtung beziehungsweise des Kraftstofftanksystems durchgeführt werden muss. Dementsprechend kann vorzugsweise vorgesehen sein, dass der im Rahmen eines erfindungsgemäßen Verfahrens durchgeführte Betrieb der Gasfördervorrichtung auch oder sogar primär einem solchen Spülen des Kraftstoffdampffilters dient. Dadurch kann die Funktionsprüfung immer dann durchgeführt werden, wenn die Gasfördervorrichtung betrieben und das Absperrventil angesteuert wird, wodurch sich in vorteilhafter Weise eine nahezu dauerhafte Funktionsprüfung im Betrieb der Brennkraftmaschine ergeben kann. Die Diagnose kann folglich dauerhaft während eines Betriebs der Brennkraftmaschine durchgeführt werden, wobei ein Betrieb der Brennkraftmaschine mit dem aktiven Betrieb zumindest einer Komponente der Brennkraftmaschine gleichgesetzt ist. Ein Betrieb eines Verbrennungsmotors ist dafür nicht zwingend erforderlich. Ergänzend oder alternativ kann jedoch auch vorgesehen sein, die Gasfördervorrichtung ausschließlich für den Zweck der Funktionsprüfung zu betreiben.

Die Unterscheidung zwischen der Funktionsfähigkeit und der Fehlfunktion kann beispielsweise darin liegen, dass zwischen einer ausreichenden Dichtheit (Funktionsfähigkeit) und einer nicht ausreichenden Dichtheit (Fehlfunktion) unterschieden wird. Eine solche nicht ausreichende Dichtheit kann dabei sowohl Folge einer mehr oder weniger großen Leckageöffnung des Kraftstofftanksystems im Bereich der Spülgasleitung als auch aus einem Lösen der Spülgasleitung von einer an diese angeschlossenen Komponente resultieren. Ergänzend oder alternativ kann eine Unterscheidung zwischen Funktionsfähigkeit und Fehlfunktion auch darin liegen, eine mögliche Verstopfung oder Blockade der Spülgasleitung (als Fehlfunktion) zu erkennen. Ebenso besteht mittels der Funktionsprüfung die Möglichkeit, die Funktionsfähigkeit von Komponenten des Kraftstofftanksystems, insbesondere von mit dem Spülgas in Kontakt kommenden Komponenten, wie beispielsweise der Spülgasfördervorrichtung, des Drucksensors oder des Absperrventils, zu prüfen. Dabei kann eine Prüfung des Absperrventils insbesondere auch basierend auf einer Leckageprüfung erfolgen, weil eine solche Leckage auch Folge eines nicht oder nicht mehr vollständig betätigbaren Absperrventils sein kann.

Das erfindungsgemäße Verfahren kann vorzugsweise bei einer Ausgestaltung des Kraftstofftanksystems beziehungsweise des Absperrventils davon umgesetzt werden, bei der das Absperrventil umso weiter geöffnet ist, je größer das PWM-Signal ist. Eine solche Ausgestaltung kann sich daraus ergeben, dass eine Grundstellung des Absperrventils die (vollständig) geschlossene Stellung ist. Diese Grundstellung kann dabei beispielsweise mittels eines Federelements realisiert sein, das das Absperrventil beziehungsweise einen Ventilkörper davon in die geschlossene Stellung beaufschlagt (d.h. drückt oder zieht). Die Ausgestaltung des Absperrventils mit geschlossener Stellung als Grundstellung kann dabei insbesondere dazu dienen, bei einer Fehlfunktion beziehungsweise bei einem Ausfall des Absperrventils eine dauerhafte Trennung zwischen der Spülgasleitung und dem Frischgasstrang der Brennkraftmaschine zu gewährleisten.

Bei einer vollständigen Funktionsfähigkeit des Kraftstofftanksystems während des Betriebs der Gasfördervorrichtung und bei einer Ansteuerung des Absperrventils kann mittels des Drucksensors eine Druckschwingung ermittelt werden, die einer überlagerten Sinus- und Cosinus-Schwingung entspricht (beziehungsweise die aus dem Messwertsignal ermittelt werden kann). Kann eine solche überlagerte Sinus- und Cosinus-Schwingung im Rahmen eines erfindungsgemäßen Verfahrens nicht ermittelt werden, kann dies dahingehend interpretiert werden, dass die Fehlfunktion vorliegt. Ergänzend oder alternativ kann jedoch auch dann eine Fehlfunktion ermittelt werden, wenn mittels des Drucksensors im Rahmen eines erfindungsgemäßen Verfahrens eine überlagerte Sinus- und Cosinus-Schwingung ermittelt wird, diese jedoch hinsichtlich zumindest eines Vergleichswerts nicht mit einer überlagerten Sinus- und Cosinus-Schwingung korreliert, die bei einer vollständigen Funktionsfähigkeit des Kraftstofftanksystems auftreten sollte. Hierzu kann vorzugsweise aus der erkannten überlagerten Sinus- und Cosinus-Schwingung ein Vergleichswert ermittelt werden, der mit einem Sollwert(bereich), der einer Soll-Sinus- und Cosinus-Schwingung entspricht, verglichen wird, wobei eine Abweichung von dem Sollwert(bereich) als Fehlfunktion erkannt wird. Zur Ermittlung des Vergleichswerts können die sich überlagernden Sinus- und Cosinus-Schwingungen einzeln quadratiert und addiert werden. Dieses grundsätzlich bekannte mathematische Verfahren leitet sich aus der diskreten Fourier-Transformation ab.

Die im Rahmen eines erfindungsgemäßen Verfahrens (zumindest bedingungsabhängig) durchgeführte Frequenzdiagnose liefert vorteilhafte Diagnoseergebnisse insbesondere bei einer Ansteuerung des Absperrventils in einem mittleren Bereich des PWM-Signals, weil sowohl bei einem zu weit geöffneten als auch bei einem zu weit geschlossenen Absperrventil eine Ausbildung der Druckschwingung nur in einem geringen Maße erfolgt, was deren Ermittlung und Auswertung erschwert. Dementsprechend kann im Rahmen eines erfindungsgemäßen Verfahrens vorgesehen sein, dass die Frequenzdiagnose durchgeführt wird, während das Absperrventil in einem Bereich des PWM-Signals, der zwischen einem unteren Grenzwert (größer 0%, insbesondere 20%) und einem oberen Grenzwert (kleiner 100%, insbesondere 80%) liegt, angesteuert wird. Liegt die Ansteuerung des Absperrventils außerhalb dieses Bereichs, kann vorgesehen sein, dass keine Funktionsprüfung des Kraftstofftanksystems durchgeführt wird oder dass die Funktionsprüfung auf einer anderen Diagnose als der Frequenzdiagnose basierend erfolgt.

Insbesondere kann vorgesehen sein, dass gemäß einer Druckänderungsdiagnose bei betriebener Gasfördervorrichtung mindestens zwei Druckmessungen mittels des Drucksensors durchgeführt werden, wobei die Druckmessungen bei unterschiedlichen Ansteuerungen des Absperrventils erfolgen, und eine durch einen Vergleich dieser Druckmessungen ermittelte Druckänderung (insbesondere in Form eines Relativwerts) mit einem Sollwert verglichen wird, wobei durch diesen Vergleich zwischen einer oder der Funktionsfähigkeit und einer oder der Fehlfunktion unterschieden wird. Ein Vorteil dieser Diagnose ist die relativ hohe Empfindlichkeit, so dass auch bei relativ weit geöffnetem Absperrventil (vorzugsweise gemäß einer relativ großen Ansteuerung des Absperrventils) eine genaue Auswertung erfolgen kann. Bei der Druckänderungsdiagnose kann demnach vorzugsweise zumindest eine der Druckmessungen bei einer Ansteuerung des Absperrventils mit einem PWM-Signal, das größer als der genannte obere Grenzwert ist, durchgeführt werden. Vorzugsweise kann vorgesehen sein, dass sich die zwei Druckmessungen auf eine Öffnungs- oder Schließbewegung des Absperrventils im Rahmen der PWM-Ansteuerung bezieht, so dass eine erste Druckmessung insbesondere zu Beginn einer solchen Öffnungs- oder Schließbewegung und die zweite Druckmessung zum Ende der entsprechenden Öffnung- oder Schließbewegung erfolgt. Dabei kann besonders bevorzugt vorgesehen sein, dass eine Messung bei einer Ansteuerung des Absperrventils unterhalb des genannten unteren Grenzwerts und eine Messung bei einer Ansteuerung des Absperrventils oberhalb des genannten oberen Grenzwerts durchgeführt wird.

Weiterhin kann vorgesehen sein, dass gemäß einer Überdruckdiagnose mindestens eine Druckmessung mittels des Drucksensors durchgeführt und dadurch ein Druckwert ermittelt wird, wobei durch einen Vergleich des Druckwerts mit einem Umgebungsdruckwert, der mittels eines Umgebungsdrucksensors ermittelt wurde, hinsichtlich des Vorliegens eines Überdrucks analysiert wird, wobei in Abhängigkeit von dem Vorliegen des Überdrucks zwischen einer oder der Funktionsfähigkeit und einer oder der Fehlfunktion unterschieden wird. Für diese Unterscheidung zwischen Funktionsfähigkeit und Fehlfunktion kann auch ein entsprechender Schwell- oder Grenzwert für den Überdruck definiert sein.

Die Frequenzdiagnose und die Druckänderungsdiagnose nutzen die Ansteuerung des Absperrventils und den Drucksensor für die Funktionsprüfungen, welche bevorzugt den Abschnitt der Spülgasleitung, der zwischen dem Drucksensor und dem Absperrventil liegt, überwachen. Fehlerbilder, welche zwischen der Gasfördervorrichtung und dem Drucksensor liegen, können gegebenenfalls bei einem Betrieb des Verbrennungsmotors der Brennkraftmaschine unter bestimmten Motorbetriebszuständen nicht gefunden werden. Um auch für den Abschnitt der Spülgasleitung, der zwischen der Gasfördervorrichtung und dem Drucksensor liegt, sicherzustellen, dass Fehler sicher erkannt werden, kann gemäß der Überdruckdiagnose ein von der Gasfördervorrichtung erzeugter Überdruck verwendet werden, welcher vom Drucksensor erfasst werden kann.

Daraus ergeben sich folgende Vorteile der Überdruckdiagnose: Die Diagnose kann stattfinden, wenn keine aktive Spülung über die Spülgasleitung erfolgt Eine (vorherige) Ansteuerung des Absperrventils ist nicht erforderlich; ein daraus resultierender Einfluss auf den Betrieb des Verbrennungsmotors kann dadurch vermieden werden. Weiterhin kann eine bessere Erkennung des Fehlerorts im Kraftstofftanksystem realisiert werden.. Des Weiteren ist eine Fehlererkennung abhängig von der Betriebsdrehzahl der Gasfördervorrichtung möglich, was auch die Erkennung eines Defektes der Gasfördervorrichtung ermöglicht, z.B. wenn das Verdichten beziehungsweise Fördern des Spülgases nicht mehr funktioniert.

Die Überdruckdiagnose kann vorzugsweise während einer Ansteuerung des Absperrventils mit einem PWM-Signal, das kleiner als der genannte untere Grenzwert ist, durchgeführt werden, weil eine Durchführung der anderen Diagnosearten dann weniger gut geeignet ist.

Das erfindungsgemäße Verfahren kann insbesondere bei einem Kraftstofftanksystem einer Brennkraftmaschine zur Anwendung kommen, die einen fremdgezündeten und gegebenenfalls auch quantitätsgeregelten, insbesondere einen nach dem Otto-Prinzip betriebenen Verbrennungsmotor umfasst, weil die für den Betrieb solcher Verbrennungsmotoren genutzten Kraftstoffe relativ (insbesondere im Vergleich zu Diesel-Kraftstoff) leicht flüchtig sind, wodurch nicht nur die besondere Notwendigkeit einer Tankentlüftung sondern auch einer Funktionsprüfung, insbesondere einer Prüfung der Dichtheit des Kraftstofftanksystems, begründet sein kann.

Die Bezeichnung "Kraftstoffdampffilter" bedingt erfindungsgemäß nicht, dass dieser den flüchtigen Kraftstoff in gasförmiger Form filtern muss. Vielmehr kann der Kraftstoff bei der Filterung auch schon wieder (teilweise) auskondensiert sein.

Die Erfindung wird nachfolgend anhand eines in den Zeichnungen dargestellten Ausführungsbeispiels näher erläutert. In den Zeichnungen zeigt:
- Fig. 1:: ein zur Durchführung eines erfindungsgemäßen Verfahrens geeignetes Kraftstofftanksystem einer Brennkraftmaschine;
- Fig. 2:: im Rahmen einer Frequenzdiagnose gemessene und ermittelte Wertverläufe;
- Fig. 3:: im Rahmen einer Druckänderungsdiagnose gemessene und ermittelte Wertverläufe; und
- Fig. 4:: im Rahmen einer Überdruckdiagnose gemessene und ermittelte Wertverläufe.

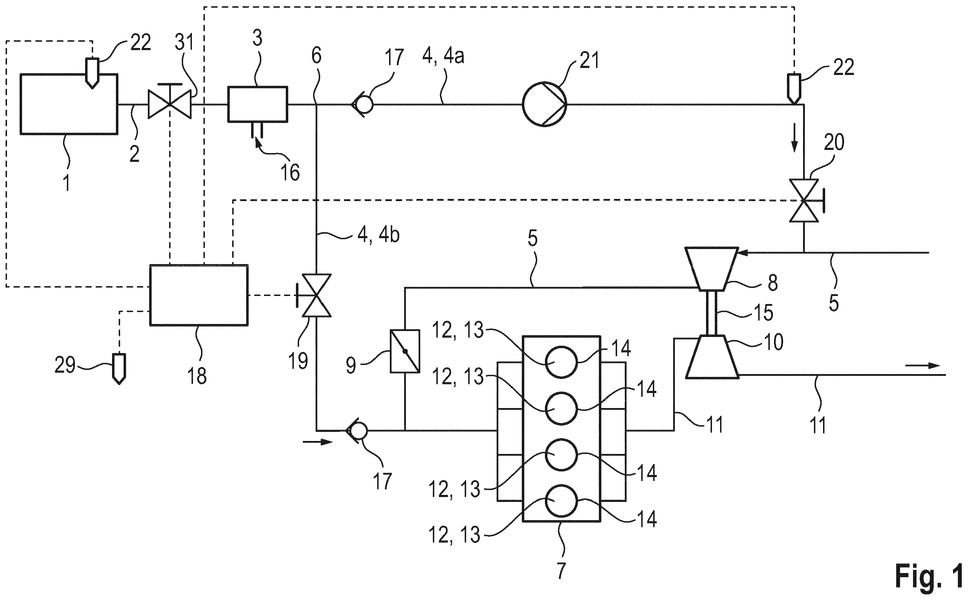

Die Fig. 1 zeigt ein Kraftstofftanksystem einer Brennkraftmaschine. Dieses umfasst einen Kraftstofftank 1, der über eine Entlüftungsleitung 2 mit einem Kraftstoffdampffilter 3 verbunden ist, wobei in die Entlüftungsleitung 2, wie in der Fig. 1 gezeigt, ein Tankabsperrventil 31 integriert sein kann. Der Kraftstoffdampffilter 3 kann insbesondere in Form eines Aktivkohlefilters oder zumindest einen solchen umfassend ausgestaltet sein. Der Kraftstoffdampffilter 3 ist weiterhin über eine Spülgasleitung 4 mit einem Frischgasstrang 5 der Brennkraftmaschine verbunden, wobei die Spülgasleitung 4 ausgehend von einer Verzweigung 6 in zwei Zweigen 4a, 4b verläuft, von denen ein erster Zweig 4a in den Frischgasstrang 5 stromauf (bezüglich der Strömungsrichtung von Frischgas in dem Frischgasstrang 5 in Richtung eines Verbrennungsmotors 7 der Brennkraftmaschine) eines in den Frischgasstrang 5 integrierten Frischgasverdichters 8 und der zweite, optional vorhandene Zweig 4b stromab des Frischgasverdichters 8 und insbesondere auch stromab einer ebenfalls stromab des Frischgasverdichters 8 in den Frischgasstrang 5 integrierten Drosselklappe 9 mündet. Der Frischgasverdichter 8 ist Teil eines Abgasturboladers, der weiterhin eine Abgasturbine 10 umfasst, die in einen Abgasstrang 11 der Brennkraftmaschine integriert ist.

Im Betrieb der Brennkraftmaschine wird in bekannter Weise in definierter Reihenfolge in Brennräumen 12 des Verbrennungsmotors 7, die teilweise von Zylindern 13 des Verbrennungsmotors 7 begrenzt sind, Gemische aus Frischgas, das vollständig oder primär aus Umgebungsluft besteht, und Kraftstoff, das beispielsweise direkt in die Brennräume 12 eingespritzt worden sein kann, verbrannt. Die dabei erzeugten Druckerhöhungen in den Brennräumen 12 bewirken, dass sich in den Zylindern 13 längsaxial beweglich geführte Kolben 14 bewegen. Diese Bewegungen der Kolben 14 werden unter Zwischenschaltung von Pleueln (nicht dargestellt) in eine Drehbewegung einer Kurbelwelle (nicht dargestellt) übersetzt, wobei die Führung der Kolben 14 über die Pleuel mittels der Kurbelwelle gleichzeitig zu einer zyklischen Hin-und-her-Bewegung der Kolben 14 führt.

Das bei der Verbrennung der Frischgas-Kraftstoff-Gemische in den Brennräumen 12 entstandene Abgas wird über den Abgasstrang 11 abgeführt und durchströmt dabei die Abgasturbine 10, was zu einem drehenden Antrieb eines Turbinenlaufrads (nicht dargestellt) führt. Diese Drehung des Turbinenlaufrads wird mittels einer Welle 15 auf ein Verdichterlaufrad (nicht dargestellt) des Frischgasverdichters 8 übertragen, wodurch der Frischgasverdichter 8 für eine Verdichtung des über den Frischgasstrang 5 dem Verbrennungsmotor 7 zugeführten Frischgases sorgt.

Der Kraftstoffdampffilter 3 des Kraftstofftanksystems steht weiterhin mit der Umgebung in gasleitender Verbindung, wozu dieser eine Umgebungsmündung 16 ausbildet.

Der Kraftstofftank 1 ist teilweise mit flüssigem Kraftstoff gefüllt, wobei ein Teil dieses Kraftstoffs verdampft ist, so dass in dem Kraftstofftank 1 auch Kraftstoff in gasförmigem Aggregatzustand vorliegt. Ein solches Verdampfen von Kraftstoff in dem Kraftstofftank 1 wird durch eine relativ hohe Temperatur des Kraftstoffs verstärkt, was insbesondere bei vergleichsweise hohen Umgebungstemperaturen der Fall ist. Um einen durch dieses Verdampfen bedingten, unzulässig hohen Überdruck in dem Kraftstofftank 1 zu vermeiden, ist die Möglichkeit eines zumindest teilweisen Druckausgleichs mit dem Umgebungsdruck über die Entlüftungsleitung 2 und den die Umgebungsmündung 16 umfassenden Kraftstoffdampffilter 3 bereitgestellt, wobei durch den Kraftstoffdampffilter 3 vermieden wird, dass ein solcher Druckausgleich zu einem Entweichen von Kraftstoffdämpfen in die Umgebung führt.

Ein solches Entlüften des Kraftstofftanks 1 führt zu einer zunehmenden Sättigung des Kraftstoffdampffilters 3, was wiederum bedingt, diesen in regelmäßigen Abständen zu regenerieren. Hierzu ist ein Spülen des Kraftstoffdampffilters 3 vorgesehen, wobei Umgebungsluft über die Umgebungsmündung 16 angesaugt wird. Diese Umgebungsluft durchströmt den Kraftstoffdampffilter 14, wodurch in dem Kraftstoffdampffilter 3 absorbierte Kraftstoffmoleküle durch die Umgebungsluft mitgenommen und über die Spülgasleitung 4 in den Frischgasstrang 5 eingetragen werden. Dadurch kann dieser Kraftstoff einer Verbrennung in den Brennräumen 12 des Verbrennungsmotors 7 zugeführt werden. Ein solches Spülen des Kraftstoffdampffilters 3 ist lediglich zeitweise und stets während des Betriebs des Verbrennungsmotors 7 vorgesehen, weil nur dann der durch das Spülen des Kraftstoffdampffilters 3 in den Frischgasstrang 5 eingebrachte Kraftstoff auch sicher einer Verbrennung in den Brennräumen 12 zugeführt werden kann.

Für ein Spülen des Kraftstoffdampffilters 3 ist ein ausreichendes Druckgefälle von dem Umgebungsdruck bis zu dem Druck in dem Frischgasstrang 5 im Bereich der Mündungen der Spülgasleitung 4 erforderlich, die aufgrund stark schwankender Drücke in dem Frischgasstrang 5 nicht immer gegeben ist. Hinsichtlich des Druckgefälles von dem Umgebungsdruck zu dem Druck in dem Frischgasstrang 5 im Bereich der Mündung des zweiten Zweigs 4b der Spülgasleitung 4 liegt häufig nicht einmal ein Druckgefälle sondern ein Druckanstieg vor, weil diese Mündung im Bereich der sich zwischen dem Frischgasverdichter 8 und dem Verbrennungsmotor 7 erstreckenden Ladeluftstrecke des Frischgasstrangs 4 gelegen ist, in der das Frischgas infolge einer Verdichtung durch den Frischgasverdichter 8 häufig mit erhöhtem Druck vorliegt. Durch eine Anordnung dieser Mündung (möglichst nahe) stromab der Drosselklappe 9 kann zwar eine durch die Drosselklappe 9 bewirkte Druckabsenkung ausgenutzt werden; diese Druckabsenkung ist jedoch häufig nicht ausreichend, um tatsächlich ein ausreichendes Druckgefälle über dem zweiten Zweig 4b der Spülgasleitung 4 zu realisieren. In diesen zweiten Zweig 4b der Spülgasleitung 4 ist daher ein Rückschlagventil 17 integriert, durch das dieser Zweig 4b der Spülgasleitung 4 selbsttätig geschlossen gehalten wird, wenn im Bereich der dazugehörigen Mündung ein Überdruck im Vergleich zu dem auf der anderen Seite des Rückschlagventils 17 gelegenen Abschnitt des zweiten Zweigs 4b der Spülgasleitung 4 vorliegt. Ergänzend dazu ist stromauf (bezüglich der Durchströmungsrichtung beim Spülen des Kraftstoffdampffilters 3) des Rückschlagventils 17 ein aktiv mittels der Steuerungsvorrichtung 18 ansteuerbares (zweites) Absperrventil 19 in den zweiten Zweig 4b der Spülgasleitung 4 integriert.

Der erste Zweig 4a der Spülgasleitung 4 mündet dagegen in einen stromauf des Frischgasverdichters 8 gelegenen Abschnitt des Frischgasstrangs 5, wobei in diesen Zweig 4a der Spülgasleitung 4, neben einem Rückschlagventil 17, ebenfalls ein (erstes) Absperrventil 20 integriert ist, das möglichst nah an der Mündung dieses Zweigs 4a angeordnet oder vorzugsweise in diese integriert ist. In dem Abschnitt des Frischgasstrangs 4 im Bereich der Mündung des ersten Zweigs 4a liegt zumindest zeitweise ein ausreichendes Druckgefälle im Vergleich zu dem an der Umgebungsmündung 16 anliegenden Umgebungsdruck vor. Dies ist jedoch nicht immer der Fall.

Um jederzeit ein Spülen des Kraftstoffdampffilters 3 zu ermöglichen, so dass sicher eine vollständige Sättigung desselben verhindert werden kann, umfasst das Kraftstofftanksystem noch eine Gasfördervorrichtung 21, die beispielsweise als Strömungsverdichter ausgebildet sein kann. Durch einen Betrieb dieser Gasfördervorrichtung 21 kann aktiv Umgebungsluft über die Umgebungsmündung 16 angesaugt werden, die dann den Kraftstoffdampffilter 3 zu dessen Spülung durchströmt und über die Gasfördervorrichtung 21 bis zu der Mündung des ersten Zweigs 4a der Spülgasleitung 4 gefördert wird. Das in den zweiten Zweig 4b der Spülgasleitung 4 integrierte, dann geschlossen gehaltene (zweite) Absperrventil 19, zumindest jedoch das sich selbsttätig schließende Rückschlagventil 17 verhindert dabei ein Ansaugen auch von Frischgas über die Mündung des zweiten Zweigs 4b aus der Ladeluftstrecke des Frischgasstrangs 5.

Da in die Umgebung entweichende Kraftstoffdämpfe potenziell umwelt- und gesundheitsschädlich sind, ist es sinnvoll und teilweise auch gesetzlich vorgeschrieben, das Kraftstofftanksystem regelmäßig zu prüfen, insbesondere auch hinsichtlich einer ausreichenden Dichtheit. Dies kann erfindungsgemäß unter Verwendung der Gasfördervorrichtung 21 erfolgen.

Hierzu ist vorgesehen, dass im Rahmen eines erfindungsgemäßen Verfahrens zumindest zeitweise während des Betriebs der Gasfördervorrichtung 21 und gleichzeitig bei einer Ansteuerung des in den ersten Zweig 4a der Spülgasleitung 4 integrierten (ersten) Absperrventils 20 mittels eines Drucksensors 22 der zwischen der Gasfördervorrichtung 21 und dem ersten Absperrventil 20 in den ersten Zweig 4a der Spülgasleitung 4 integriert ist, der innerhalb dieses Abschnitts herrschenden Druck des Spülgases kontinuierlich ermittelt wird. Dabei erfolgt der Betrieb der Gasfördervorrichtung 21 und des ersten Absperrventils 20 primär mit dem Ziel einer Spülung des Kraftstoffdampffilters 3, wobei mittels des ersten Absperrventils 20 die Einleitung des Spülgases in den Frischgasstrang 5 gesteuert wird. Aufgrund der Ansteuerung des ersten Absperrventils 20 mittels PWM, wodurch dieses Absperrventil 20 zur Realisierung eines definierten Öffnungszustands einem PWM-Signal entsprechend mehrfach geöffnet und geschlossen wird, entwickelt sich in diesem Abschnitt des ersten Zweigs 4a der Spülgasleitung 4 eine Druckschwingung, die durch die entsprechenden Schwankungen der Messwerte des Drucksensors 22 ermittelt und ausgewertet werden kann. Basierend auf dem Ergebnis der Auswertung kann zwischen einer Funktionsfähigkeit und einer Fehlfunktion des Kraftstofftanksystems, beispielsweise einer ausreichenden oder nicht ausreichenden Dichtheit der Spülgasleitung 4 in diesem Abschnitt des ersten Zweigs 4a der Spülgasleitung 4 unterschieden werden, denn die Ausbildung der Druckschwingung ist umso ausgeprägter, je mehr der betrachtete Abschnitt des ersten Zweigs 4a der Spülgasleitung 4a abgeschlossen ist.

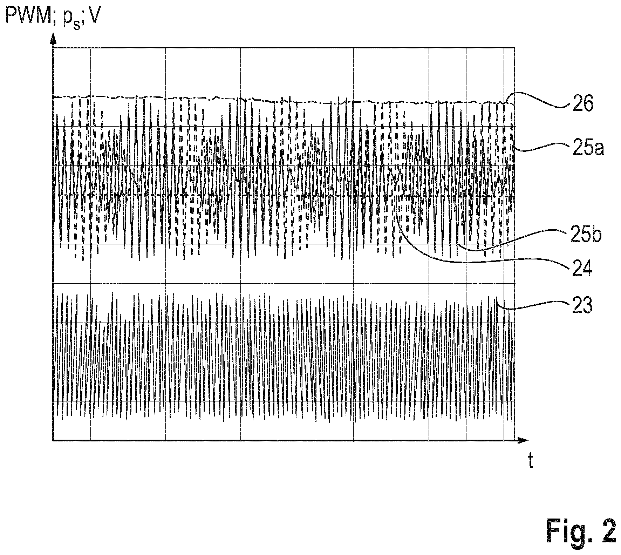

Die Fig. 2 verdeutlicht dieses Vorgehen, wobei die mit durchgezogener Linie gezeichnete Kurve den Verlauf 23 des mittels des Drucksensors 22 ermittelten Werts des Drucks des Spülgases, der eine Druckschwingung darstellt, zeigt. Die punktiert gezeichnete Kurve zeigt den (konstanten) Verlauf 24 des PWM-Signals der Ansteuerung des ersten Absperrventils 20 dar. Die Kurven 25a (gestrichelt) und 25b (durchgezogen) stellen eine aus der Druckschwingung ermittelte Überlagerung von Sinus- und Cosinus-Schwingungen dar. Aus diesen überlagerten Sinus- und Cosinus-Schwingungen 25 wird der Verlauf 26 eines Vergleichswerts V ermittelt. Dieser Vergleichswert V wird mit einem Sollwert verglichen, der aus entsprechend überlagerten Sinus- und Cosinus-Schwingungen, die bei vollständig funktionsfähigem Kraftstofftanksystem unter entsprechenden Betriebsbedingungen ermittelt wurde, abgeleitet wurde. Weicht der ermittelte Vergleichswert V von dem Sollwert über eine Toleranzgrenze beziehungsweise einen Grenzwert hinausgehend ab, wird daraus eine Fehlfunktion des Kraftstofftanksystems, beispielsweise eine nicht ausreichende Dichtheit des zwischen der Gasfördervorrichtung 21 und dem ersten Absperrventil 20 gelegenen Abschnitt des ersten Zweigs 4a der Spülgasleitung 4 abgeleitet.

Eine solche Frequenzdiagnose wird nur dann durchgeführt, wenn beziehungsweise während das erste Absperrventil 20 in einem Bereich des PWM-Signals, der zwischen einem unteren Grenzwert, beispielsweise 20%, und einem oberen Grenzwert, beispielsweise 80%, liegt, angesteuert wird. Liegt das PWM-Signal unterhalb des unteren Grenzwerts oder oberhalb des oberen Grenzwerts, kann im Rahmen eines erfindungsgemäßen Verfahrens eine andere Form der Diagnose zur Funktionsprüfung des Kraftstofftanksystems durchgeführt werden.

Beispielsweise kann eine Druckänderungsdiagnose realisiert werden, bei der bei betriebener Gasfördervorrichtung 21 mittels des Drucksensors 22 mindestens zwei Druckmessungen durchgeführt werden, wobei die Druckmessungen bei unterschiedlichen Ansteuerungen des ersten Absperrventils 20 erfolgen. Durch einen Vergleich dieser Druckmessungen wird eine Druckänderung in Form eines Relativwerts (pₛ im Zeitpunkt t₁ im Verhältnis zu pₛ im Zeitpunkt t₂) ermittelt und dieser mit einem Sollwert verglichen, wobei durch diesen Vergleich des Differenzwerts mit dem Sollwert zwischen einer Funktionsfähigkeit und einer Fehlfunktion des Kraftstofftanksystems unterschieden wird.

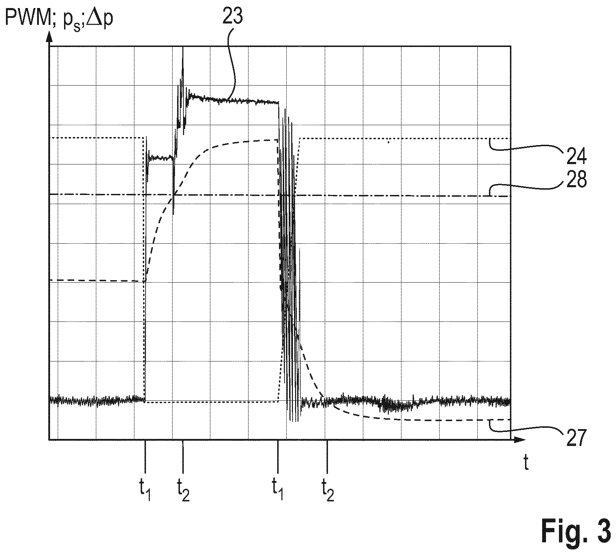

Die Fig. 3 verdeutlicht ein entsprechendes Vorgehen, wobei die mit durchgezogener Linie gezeichnete Kurve wiederum den Verlauf 23 des mittels des Drucksensors 22 gemessenen Drucks pₛ des Spülgases darstellt. Strichpunktiert ist der Verlauf 24 des PWM-Signals der Ansteuerung des ersten Absperrventils 20 dargestellt, wobei dieses Absperrventil 20 zunächst vollständig geöffnet (entsprechend einer PWM-Ansteuerung von 100%) ist, dann schnell vollständig geschlossen (entsprechend einer PWM-Ansteuerung von 0%) und kurz danach wieder schnell vollständig geöffnet wird. Der Druck pₛ des Spülgases im Bereich des Drucksensors 22 ist - bei mit konstanter Last betriebener Gasfördervorrichtung 21 (vgl. den in der Fig. 3 gezeigten (konstanten) Verlauf 28 des PWM-Signals der Ansteuerung der Gasfördervorrichtung 21) - während des geschlossen Haltens des ersten Absperrventils 20 deutlich größer als während des geöffnet Haltens. Der Verlauf 27 der Druckänderung Δp beziehungsweise entsprechender Relativwerte ist dabei mit gestrichelt gezeichneter Kurve dargestellt. Die zwei Druckmessungen werden je zweimal zu den in der Fig. 3 gekennzeichneten Zeitpunkten t₁ und t₂ durchgeführt, d.h. einmal vor und nach dem Schließen und einmal vor und nach dem Öffnen des ersten Absperrventils 20. Die durch einen Vergleich der zu den jeweiligen Zeitpunkten t₁ und t₂ vorliegenden Werte ermittelte Druckänderung kann gemäß der Druckänderungsdiagnose jeweils mit einem Sollwert verglichen werden. Basierend auf diesen Vergleichen kann zwischen einer Funktionsfähigkeit und einer Fehlfunktion des Kraftstofftanksystems unterschieden werden.

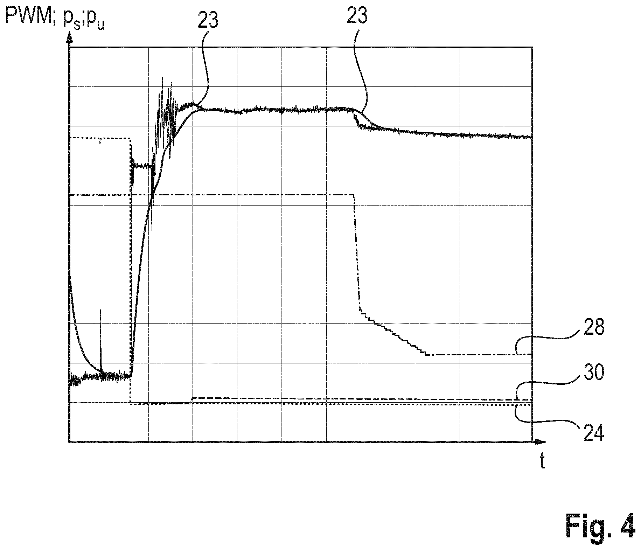

Weiterhin kann gemäß der Fig. 4 eine Überdruckdiagnose durchgeführt werden, bei der mindestens eine Druckmessung mittels des Drucksensors 22 durchgeführt und dadurch ein Druckwert ermittelt wird, wobei durch einen Vergleich dieses Druckwerts mit einem Druckwert bezüglich des Umgebungsdrucks p_{U}, der mittels eines Umgebungsdrucksensors 29 ermittelt wurde, hinsichtlich des Vorliegens eines Überdrucks analysiert wird und darauf basierend zwischen einer Funktionsfähigkeit und einer Fehlfunktion unterschieden wird. Gemäß der Fig. 4 wird das zunächst vollständig geöffnete (entsprechend einer PWM-Ansteuerung von 100%) erste Absperrventil 20 schnell geschlossen (entsprechend einer PWM-Ansteuerung von 0%) und anschließend vollständig geschlossen gehalten (vgl. Verlaufskurve 24). Vor und auch eine Zeit lang nach dem Schließen des ersten Absperrventils 20 wird die Gasfördervorrichtung 21 mit einer konstant hohen Last beziehungsweise Ansteuerung betrieben (vgl. Verlaufskurve 28). Dies führt dazu, dass der mittels des Drucksensors 22 ermittelte Verlauf des Drucks p_{S} des Spülgases mit dem schnellen Schließen des ersten Absperrventils 20 sprunghaft ansteigt (vgl. Verlaufskurve 23), während der Umgebungsdruck im Wesentlichen gleich bleibt (vgl. Verlaufskurve 30). Da der Druck p_{S} des Spülgases gemäß der Fig. 4 bei geschlossenem ersten Absperrventil 20 im Wesentlichen konstant bleibt, solange die Gasfördervorrichtung 21 mit konstanter Last betrieben wird, kann aus dem Verlauf dieses (Über-)Drucks darauf geschlossen werden, dass keine Fehlfunktion und insbesondere keine nicht ausreichende Dichtheit in dem Abschnitt des ersten Zweigs 4a der Spülgasleitung 4, der zwischen der Gasfördervorrichtung 21 und dem ersten Absperrventil 20 gelegen ist, vorliegt. Anderenfalls würde ein mehr oder weniger schnelles Absinken des Druckverlaufs trotz geschlossenen Absperrventils 20 und trotz des Betriebs der Gasfördervorrichtung 21 mit konstanter Last erkennbar sein.

Eine Ermittlung einer Fehlfunktion mittels einer Überdruckdiagnose kann auch darauf basieren, dass der gemessene Druck p_{S} trotz geschlossenen Absperrventils 20 und trotz des Betriebs der Gasfördervorrichtung 21 nicht oder nicht schnell genug ansteigt. Beispielsweise kann vorgesehen sein, dass bei einer Inbetriebnahme des Verbrennungsmotors 7 die Gasfördervorrichtung 21 noch ausgeschaltet ist, so dass der Druck in der Spülgasleitung in etwa dem Umgebungsdruck entsprechen kann. Wird dann die Gasfördervorrichtung 21 bei geschlossenem ersten Absperrventil 20 in Betrieb genommen, kann als Fehlerbild kein (ausreichender) Druckaufbau ermittelt werden, wenn z.B. die Gasfördervorrichtung 21 einen Defekt aufweist und/oder wenn der Abschnitt des ersten Zweigs 4a der Spülgasleitung 4 zwischen der Gasfördervorrichtung 21 und dem Drucksensor 22 abgefallen oder verstopft ist und/oder wenn der Abschnitt des ersten Zweigs 4a der Spülgasleitung 4 zwischen dem Drucksensor 22 und dem ersten Absperrventil 20 abgefallen ist.

Für die Durchführung einer Überdruckdiagnose kann eine einzelne Messung ausreichend sein, wenn der entsprechende Messwert mit einem Vergleichswert verglichen wird, der angibt, wie hoch der Druck pₛ bei funktionsfähigem Kraftstofftanksystem und insbesondere ausreichend dichtem Abschnitt des ersten Zweigs 4a der Spülgasleitung 4, der zwischen der Gasfördervorrichtung 21 und dem ersten Absperrventil 20 gelegen ist, bei einem entsprechenden Betrieb der Gasfördervorrichtung 21 und einem entsprechend (insbesondere vollständig) geschlossenen ersten Absperrventil 20 sein sollte. Es können jedoch auch mindestens zwei Druckmessungen mittels des Drucksensors 22 durchgeführt werden, um durch einen Vergleich dieser Messergebnisse feststellen zu können, ob, in welcher Weise und in welchem Maße sich der Verlauf des Drucks p_{S} des Spülgases verändert.

### Bezugszeichenliste

1 Kraftstofftank
2 Entlüftungsleitung
3 Kraftstoffdampffilter
4 Spülgasleitung
4a erster Zweig der Spülgasleitung
4b zweiter Zweig der Spülgasleitung
5 Frischgasstrang
6 Verzweigung der Spülgasleitung
7 Verbrennungsmotor
8 Frischgasverdichter
9 Drosselklappe
10 Abgasturbine
11 Abgasstrang
12 Brennraum des Verbrennungsmotors
13 Zylinder des Verbrennungsmotors
14 Kolben des Verbrennungsmotors
15 Welle
16 Umgebungsmündung
17 Rückschlagventil
18 Steuerungsvorrichtung
19 (zweites) Absperrventil
20 (erstes) Absperrventil
21 Gasfördervorrichtung
22 Drucksensor
23 Verlauf des Drucks p_{S} des Spülgases
24 Verlauf des PWM-Signals der Ansteuerung des ersten Absperrventils
25a Sinus-Schwingung
25b Cosinus- Schwingung
26 Verlauf des Vergleichswerts V
27 Verlauf der Relativwerte zur Druckänderung Δp
28 Verlauf des PWM-Signals der Ansteuerung der Gasfördervorrichtung
29 Umgebungsdrucksensor
30 Verlauf des Umgebungsdrucks p_{U}
31 Tankabsperrventil

## Patentansprüche

1. Verfahren zur Funktionsprüfung eines Kraftstofftanksystems einer Brennkraftmaschine, wobei das Kraftstofftanksystem
- einen Kraftstofftank (1),
- einen Kraftstoffdampffilter (3), der in fluidleitender Verbindung mit einer Umgebungsmündung (16) steht,
- eine von dem Kraftstofftank (1) zu dem Kraftstoffdampffilter (3) führende Entlüftungsleitung (2),
- eine von dem Kraftstoffdampffilter (3) zu einem Frischgasstrang (5) der Brennkraftmaschine führende Spülgasleitung (4),
- eine in die Spülgasleitung (4) integrierte Gasfördervorrichtung (21) zur Förderung von Spülgas durch die Spülgasleitung (4),
- ein Absperrventil (20), das zwischen einer Mündung der Spülgasleitung (4) in den Frischgasstrang (5) und der Gasfördervorrichtung (21) in der Spülgasleitung (4) angeordnet ist, und
- einen in die Spülgasleitung (4) integrierten Drucksensor (22)
umfasst, **dadurch gekennzeichnet, dass**
- gemäß einer Frequenzdiagnose die Gasfördervorrichtung (21) betrieben und das Absperrventil (20) mittels PWM angesteuert wird, wodurch das Absperrventil (20) zur Realisierung eines definierten Öffnungszustands einem PWM-Signal entsprechend mehrfach geöffnet und geschlossen wird, wobei eine Druckschwingung des Spülgases, die sich durch die entsprechenden Öffnungs- und Schließbewegungen des Absperrventils (20) ergibt, mittels des Drucksensors (22) ermittelt und ausgewertet wird und basierend auf dem Ergebnis der Auswertung zwischen einer Funktionsfähigkeit und einer Fehlfunktion unterschieden wird, wobei die Frequenzdiagnose durchgeführt wird, während das Absperrventil (20) in einem Bereich des PWM-Signals, der zwischen einem unteren Grenzwert und einem oberen Grenzwert liegt, angesteuert wird, und
- gemäß einer Druckänderungsdiagnose bei betriebener Gasfördervorrichtung (21) mindestens zwei Druckmessungen mittels des Drucksensors (22) durchgeführt werden, wobei die Druckmessungen bei unterschiedlichen Ansteuerungen des Absperrventils (20) erfolgen, und dass eine durch einen Vergleich dieser Druckmessungen ermittelte Druckänderung mit einem Sollwert verglichen wird, wobei durch diesen Vergleich zwischen einer/der Funktionsfähigkeit und einer/der Fehlfunktion unterschieden wird, wobei bei der Druckänderungsdiagnose zumindest eine der Druckmessungen bei einer Ansteuerung des Absperrventils (20) mit einem PWM-Signal, das größer als der obere Grenzwert ist, durchgeführt wird, und
- gemäß einer Überdruckdiagnose bei betriebener Gasfördervorrichtung (21) mindestens eine Druckmessung mittels des Drucksensors (22) durchgeführt und dadurch ein Druckwert ermittelt wird, wobei durch einen Vergleich des Druckwerts mit einem Umgebungsdruckwert, der mittels eines Umgebungsdrucksensors (29) ermittelt wurde, hinsichtlich des Vorliegens eines Überdrucks analysiert wird, wobei in Abhängigkeit von dem Vorliegen des Überdrucks zwischen einer/der Funktionsfähigkeit und einer/der Fehlfunktion unterschieden wird, wobei die Überdruckdiagnose bei einer Ansteuerung des Absperrventils mit einem PWM-Signal, das kleiner als der untere Grenzwert ist, durchgeführt wird.

2. Verfahren gemäß Anspruch 1, **dadurch gekennzeichnet, dass** ausgewertet wird, ob die Druckschwingung einer überlagerten Sinus- und Cosinus-Schwingung entspricht.

3. Verfahren gemäß Anspruch 2, **dadurch gekennzeichnet, dass** dann, wenn die Druckschwingung einer überlagerten Sinus- und Cosinus-Schwingung nicht entspricht, eine/die Fehlfunktion erkannt wird.

4. Verfahren gemäß Anspruch 2 oder 3, **dadurch gekennzeichnet, dass** dann, wenn die Druckschwingung einer überlagerten Sinus- und Cosinus-Schwingung entspricht, aus der erkannten überlagerten Sinus- und Cosinus-Schwingung ein Vergleichswert ermittelt wird, der mit einem Sollwert verglichen wird, wobei bei einer Abweichung von dem Sollwert eine/die Fehlfunktion erkannt wird.

## Claims

1. Method for functional testing of a fuel tank system of an internal combustion engine, wherein the fuel tank system comprises
- a fuel tank (1),
- a fuel vapor filter (3) fluidically connected to a surroundings opening (16),
- a vent line (2) leading from the fuel tank (1) to the fuel vapor filter (3),
- a purge gas line (4) leading from the fuel vapor filter (3) to a fresh gas tract (5) of the internal combustion engine,
- a gas delivery device (21) integrated into the purge gas line (4) for delivering purge gas through the purge gas line (4),
- a shut-off valve (20) arranged between an opening of the purge gas line (4) into the fresh gas tract (5) and the gas delivery device (21) in the purge gas line (4), and
- a pressure sensor (22) integrated into the purge gas line (4)
**characterized in that**
- in accordance with a frequency diagnosis, the gas delivery device (21) is operated and the shut-off valve (20) is actuated by means of PWM, whereby the shut-off valve (20) is opened and closed multiple times according to a PWM signal in order to achieve a defined opening state, wherein a pressure oscillation of the purge gas, which pressure oscillation results from the corresponding opening and closing movements of the shut-off valve (20), is ascertained and evaluated by means of the pressure sensor (22) and a distinction is made, on the basis of the result of the evaluation, between an operability and a malfunction, wherein the frequency diagnosis is carried out while the shut-off valve (20) is actuated in a range of the PWM signal which is between a lower limit value and an upper limit value, and
- in accordance with a pressure change diagnosis, at least two pressure measurements are carried out by means of the pressure sensor (22) while the gas delivery device (21) is in operation, wherein the pressure measurements are carried out during different actuations of the shut-off valve (20), and **in that** a pressure change ascertained by comparing these pressure measurements is compared with a target value, wherein, as a result of this comparison, a distinction is made between a/the operability and a/the malfunction, wherein, during the pressure change diagnosis, at least one of the pressure measurements is carried out when the shut-off valve (20) is actuated by means of a PWM signal which is greater than the upper limit value, and
- in accordance with an overpressure diagnosis, at least one pressure measurement is carried out by means of the pressure sensor (22), and a pressure value is ascertained as a result, while the gas delivery device (21) is in operation, wherein an analysis is carried out with regard to the presence of overpressure by comparing the pressure value with an ambient pressure value which was ascertained by means of an ambient pressure sensor (29), wherein, depending on the presence of overpressure, a distinction is made between a/the operability and a/the malfunction, wherein the overpressure diagnosis is carried out when the shut-off valve is actuated by means of a PWM signal which is smaller than the lower limit value.

2. Method according to claim 1, **characterized in that** it is evaluated whether the pressure oscillation corresponds to a superimposed sinusoidal and cosinusoidal oscillation.

3. Method according to claim 2, **characterized in that,** if the pressure oscillation does not correspond to a superimposed sinusoidal and cosinusoidal oscillation, a/the malfunction is detected.

4. Method according to claim 2 or 3, **characterized in that,** if the pressure oscillation corresponds to a superimposed sinusoidal and cosinusoidal oscillation, a comparative value is ascertained from the detected superimposed sinusoidal and cosinusoidal oscillation, which comparative value is compared with a target value, wherein a/the malfunction is detected in the case of a deviation from the target value.

## Revendications

1. Procédé de vérification de fonctionnement d'un système de réservoir de carburant d'un moteur à combustion interne, dans lequel le système de réservoir de carburant comprend
- un réservoir de carburant (1),
- un filtre à vapeur de carburant (3) qui est en liaison par conduction de fluide avec une embouchure vers l'environnement (16),
- une conduite de dégazage (2) conduisant du réservoir de carburant (1) au filtre à vapeur de carburant (3),
- une conduite de gaz de purge (4) conduisant du filtre à vapeur de carburant (3) à une ligne de gaz frais (5) du moteur à combustion interne,
- un dispositif de transport de gaz (21) intégré dans la conduite de gaz de purge (4) pour le transport de gaz de purge à travers la conduite de gaz de purge (4),
- une vanne d'arrêt (20), qui est agencée entre une embouchure de la conduite de gaz de purge (4) dans la ligne de gaz frais (5) et le dispositif de transport de gaz (21) dans la conduite de gaz de purge (4), et
- un capteur de pression (22) intégré dans la conduite de gaz de purge (4)
**caractérisé en ce que**
- selon un diagnostic de fréquence, le dispositif de transport de gaz (21) est exploité et la vanne d'arrêt (20) est commandée au moyen de PWM, ce qui fait que la vanne d'arrêt (20) est ouverte et fermée plusieurs fois selon un signal PWM pour réaliser un état d'ouverture défini, dans lequel une oscillation de pression du gaz de purge, qui résulte des mouvements d'ouverture et de fermeture correspondants de la vanne d'arrêt (20), est déterminée et évaluée par le biais du capteur de pression (22) et, sur la base du résultat de l'évaluation, une distinction est faite entre une capacité de fonctionnement et un dysfonctionnement, dans lequel le diagnostic de fréquence est effectué pendant que la vanne d'arrêt (20) est commandée dans une plage du signal PWM qui se situe entre une valeur limite inférieure et une valeur limite supérieure, et
- selon un diagnostic de variation de pression, lorsque le dispositif de transport de gaz (21) est en fonctionnement, au moins deux mesures de pression sont effectuées par le biais du capteur de pression (22), dans lequel les mesures de pression ont lieu lors de différentes commandes de la vanne d'arrêt (20),
et **en ce qu'**une variation de pression déterminée par une comparaison de ces mesures de pression est comparée à une valeur de consigne, dans lequel cette comparaison permet de faire la distinction entre une/la capacité de fonctionnement et un/le dysfonctionnement, dans lequel au moins l'une des mesures de pression est effectuée lors d'une commande de la vanne d'arrêt (20) avec un signal PWM qui est supérieur à la valeur limite supérieure, lors du diagnostic de variation de pression, et
- selon un diagnostic de surpression, lorsque le dispositif de transport de gaz (21) est en fonctionnement, au moins une mesure de pression est effectuée par le biais du capteur de pression (22) et une valeur de pression est ainsi déterminée, dans lequel une comparaison de la valeur de pression avec une valeur de pression d'environnement, qui a été déterminée par le biais d'un capteur de pression d'environnement (29), est analysée en ce qui concerne la présence d'une surpression, dans lequel une distinction est faite, en fonction de la présence de la surpression, entre une/la capacité de fonctionnement et un/le dysfonctionnement, dans lequel le diagnostic de surpression est effectué lors d'une commande de la vanne d'arrêt avec un signal PWM qui est inférieur à la valeur limite inférieure.

2. Procédé selon la revendication 1, **caractérisé en ce que** l'on évalue si l'oscillation de pression correspond à une oscillation sinus et cosinus superposée.

3. Procédé selon la revendication 2, **caractérisé en ce que,** lorsque l'oscillation de pression ne correspond pas à une oscillation sinus et cosinus superposée, un/le dysfonctionnement est reconnu.

4. Procédé selon la revendication 2 ou 3, **caractérisé en ce que,** lorsque l'oscillation de pression correspond à une oscillation sinus et cosinus superposée, une valeur de comparaison est déterminée à partir de l'oscillation sinus et cosinus superposée reconnue, laquelle est comparée à une valeur de consigne, dans lequel un/le dysfonctionnement est reconnu en cas d'écart par rapport à la valeur de consigne.
